Europäisches Patentamt

European Patent Office

Office européen des brevets

(19)

(11) Veröffentlichungsnummer: **0 399 431**
**A2**

## (12) EUROPÄISCHE PATENTANMELDUNG

(21) Anmeldenummer: **90109590.1**

(51) Int. Cl.5: **G10L 9/00**

(22) Anmeldetag: **21.05.90**

(30) Priorität: **20.05.89 DE 3916478**

(43) Veröffentlichungstag der Anmeldung:
**28.11.90 Patentblatt 90/48**

(84) Benannte Vertragsstaaten:
**AT BE CH DE ES FR GB IT LI NL SE**

(71) Anmelder: **Standard Elektrik Lorenz**
**Aktiengesellschaft**
**Lorenzstrasse 10**
**D-7000 Stuttgart 40(DE)**
(84) **DE**

Anmelder: **ALCATEL N.V.**
**Strawinskylaan 341 (World Trade Center)**
**NL-1077 XX Amsterdam(NL)**

(84) **BE CH ES FR GB IT LI NL SE AT**

(72) Erfinder: **Hackbarth, Heidi, Dr.**
**Greutterwaldstrasse 9**
**D-7000 Stuttgart 31(DE)**
Erfinder: **Thierer, Gebhard, Dr.**
**Breslauer Strasse 1**
**D-7257 Ditzingen 1(DE)**
Erfinder: **Krause, Andreas, Dr.**
**Scheffelstrasse 4**
**D-7257 Ditzingen 4(DE)**

(74) Vertreter: **Pohl, Heribert, Dipl.-Ing et al**
**Standard Elektrik Lorenz AG Patent- und**
**Lizenzwesen Postfach 30 09 29**
**D-7000 Stuttgart 30(DE)**

(54) **Neuronale Netzwerkarchitektur.**

(57) Zur automatischen Mustererkennung weist ein neuronales Netzwerk eine Eingangsschicht (IL) auf (zweidimensionales Feld aus $M \times N$ Elementen, $M$ = Anzahl der Merkmalsvektoren, $N$ = Anzahl der Koeffizienten je Merkmalsvektor), die in sich überlappende Mustersegmente ($LH \times LV$, mit $LH < M$, $LV < N$) aufgeteilt wird, wobei benachbarte Segmente sich mindestens in einer Richtung teilweise überlappen. Jedes neuronale Element einer nachgeschalteten verborgenen Schicht (HL) wird aus einem unterschiedlich gewichteten Summenwert der Amplituden eines Segments der Eingangsschicht (IL) gebildet.

Die verborgene Schicht (HL) wird dann mit einer eindimensionalen Ausgangsschicht (OL) vollvernetzt, wobei das Element der Ausgangsschicht, das den größten Summenwert aufweist, dem zu erkennenden Muster entspricht.

## Neuronale Netzwerkarchitektur

Die Erfindung betrifft eine neuronale Netzwerkarchitektur zur automatischen Mustererkennung.

Bisherige Methoden zur Mustererkennung von Sprache, wie die dynamische Zeitverzerrung oder das Hidden Markov-Modell sind bei sprecherunabhängiger Erkennung nur für kleine Wortschätze von 5 bis 20 Wörtern mit hohen Erkennungsraten verwendbar (Wilpon J.G. et al, (1988) isolated word recognition over DDD telephone network-results of two extensive field studies, IEEE, ICASSP (1), 55-58, U.S.-Patent 4,587,670 "Hidden Markov Model Speech Recognition Arrangement"). Für größere Wortschätze verschlechtern sich die Erkennungsraten jedoch erheblich. Ferner müssen für eine sprecherunabhängige Erkennung von Sprachmustern in einer Trainingsphase eine sehr große Anzahl von Testsprechern (ca. 100 bis 1000 Sprecher) aufgenommen und deren Sprachmuster verarbeitet werden, um für die abzuspeichernden Referenzdaten Aussprachevarianten im ausreichenden Maße zur Verfügung zu haben.

Ferner ist es bekannt zur Mustererkennung sogenannte neuronale Netze zu verwenden, die eine hierarchische Netzwerkstruktur aufweisen. In solchen Netzwerken wird jedes Element einer höheren Schicht von Elementen einer niedrigeren Schicht beeinflußt, wobei typischerweise jedes Element einer Schicht mit allen Elementen der darunterliegenden Schicht verbunden (Peeling S.M., Moore R.K., Dec. 17, 1987, Experiments in isolated digit recognition using the multi-layer perceptron, R.S.R.E. Memorandum 4073).

Ähnliche neuronale Netzwerke, die aus sogenannten "time delay"-Netzen mit gleichen Gewichtungsfaktoren aufgebaut sind, wurden bereits für sprecherunabhängige Ganzwortmustererkennung untersucht (Bottun, L. Liénard, J.S., (1988) Multispeker digit recognition Intl. conf. "Connectionism in perspective", Zürich, Switzerland, CH 38).

Der Erfindung liegt die technische Aufgabe zugrunde, eine neuronale Netzwerkarchitektur zur automatischen Mustererkennung anzugeben, die eine hohe Erkennungsrate, mit möglichst wenig Aufwand ermöglicht.

Erfindungsgemäß wird diese Aufgabe durch die technische Lehre des Patentanspruchs 1 gelöst.

Insbesondere durch die erfindungsgemäße Bildung der Elemente der verborgenen Schicht mittels sich überlappender Segmente der Eingangsschicht wird, im Vergleich zur bekannten Vollvernetzung der beiden Schichten, eine erhebliche Aufwandsreduzierung ermöglicht. Diese überlappende Vernetzung berücksichtigt, daß nur zeitlich begrenzte Abschnitte im zu erkennenden Sprachsignal für die Analyse wichtige Informationen (z.B.

Formautänderungen) beinhalten, während akustische Informationen etwa am Wortanfang und -ende voneinander unabhängig sind.

Es hat sich eine Reduktion der Anzahl der Elemente der Eingangsschicht zur Anzahl der Elemente in der verborgenen Schicht im Verhältnis 10 zu 1 als sehr wirkungsvoll erwiesen.

Ferner sind aufgrund der erfindungsgemäßen Netzwerkarchitektur speziell bei einer sprecherunabhängigen Spracherkennung nur der Einsatz von relativ wenig Testpersonen erforderlich (für ein 50 Wörter Vokabular etwa 15 Testpersonen im Vergleich zu mindestens 100 Testpersonen bei bisherigen Methoden).

Weitere vorteilhafte Ausgestaltungen des Gegenstandes der Erfindung sind den Unteransprüchen zu entnehmen.

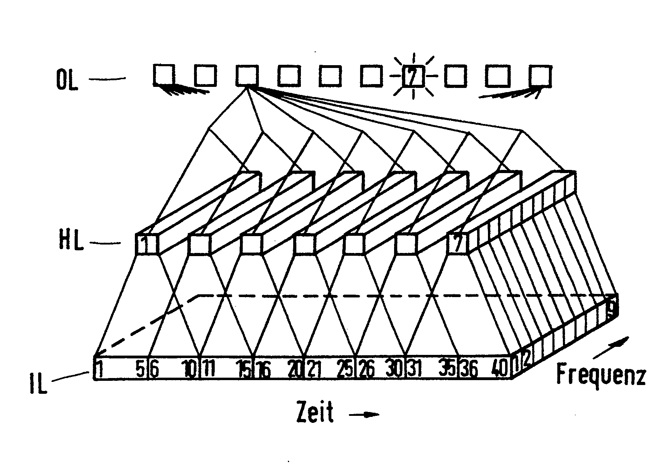

Ein Ausführungsbeispiel wird im folgenden anhand der Zeichnung erläutert.

In der Figur wird ein prinzipieller Aufbau eines neuronalen Netzes gemäß der Erfindung gezeigt.

Eine das zu erkennenden Sprachmuster beinhaltende Eingangsschicht IL weist ein zweidimensionales Feld aus $M \times N$ neuronalen Elementen auf. M entspricht der Anzahl der aus dem Eingangssprachsignal abgeleiteten Merkmalsvektoren und N entspricht der Anzahl von frequenzabhängigen Koeffizienten je Merkmalsvektor, wobei hier $M = 40$ und $N = 9$ gewählt wurden.

Dabei entspricht eine erste Dimension des Feldes der Zeit und eine zweite Dimension des Feldes der Frequenz und die Amplitude der Merkmalsvektoren ist die Zeit-Frequenz-Energiedichte.

Die so gewählte Eingangsschicht stellt somit ein 360 Elemente großes zweidimensionales Feld dar.

Der Eingangsschicht IL nachgeschaltet ist eine verborgene Schicht HL (hidden layer), die ebenfalls aus einem zweidimensionalen Feld besteht. Erfindungsgemäß wird jedes Element der verborgenen Schicht HL aus einem unterschiedlich gewichteten Summenwert der Amplituden eines $LH \times LV$ großen Segmentes der Eingangsschicht IL gebildet, mit $LH < M$, $LV < N$.

Die Segmente werden so gewählt, daß benachbarte Segmente sich vorzugsweise in der Zeitachse jeweils zur Hälfte überlappen. Außerdem werden die Anzahl der Elemente der Eingangsschicht IL zur Anzahl der Elemente der verborgenen Schicht HL im Verhältnis 10:1 reduziert, so daß sich, wie in der Figur gezeigt, für jedes Segment $LK = 10$ und $LV = 1$ ergibt.

Das erste Segment stellt den Summenwert aus $(M = 1$ bis $M = 10) \times N = 1$ neuronalen Elementen der Eingangsschicht IL dar. Entsprechend ergeben sich das zweite und die folgenden Segmente aus der Summe von (M = 6 bis M = 15) × N = 1 Elementen bis zur Summe von (M = 31 bis M = 40) × N = 1 Elementen.

Diese neue erfinderische Art der überlappenden Vernetzung der Eingangsschicht IL berücksichtigt, wie bereits eingangs erwähnt, daß lediglich zeitlich begrenzte Abschnitte im Sprachsignal für die Analyse von Interesse sind, während die akustischen Merkmale, etwa am Wortanfang oder -ende voneinander unabhängig sind. Es werden außer der erheblichen Aufwandsreduktion, auch die bei einer vollständigen Vernetzung möglicherweise auftretenden negativen interferierenden Einflüsse ausgeschlossen.

Der verborgenen Schicht HL können eine oder mehrere eindimensionale verborgene Schichten nachgeschaltet sein, deren Elemente aus gewichteten Summenwerten aller Elemente der vorangehenden Schicht gebildet werden.

Im hier gezeigten Ausführungsbeispiel ist der verborgenen Schicht HL eine eindimensionale Ausgangsschicht OL nachgeschaltet, deren Elemente aus gewichteten Summenwerten aller Elemente der verborgenen Schicht gebildet werden (d.h. vollständige Vernetzung). Dasjenige Element der Ausgangsschicht OL, das den größten Summenwert aufweist, hier Nr. 7, entspricht dem zu erkennenden Muster.

Die unterschiedlichen Wichtungsfaktoren für die Verbindungsstärken zwischen je zwei neuronalen Elementen werden nach dem bekannten Algorithmus des "error back propagation" bestimmt (Rumelhart DE, Hinton GE, Williams RJ (1986) Learning internal representations by error back propagation. In Rumelhart DE, MoClelland JL (eds) Parallel distributed processing: Explorations in the microstructure of cognition, Vol. I, Foundations, MIT Press, Ch. 8, 318 - 362).

Aufgrund der erfindungsgemäßen neuronalen Netzwerkarchitektur ergeben sich, außer der erheblichen Aufwandsreduktion, bei der sprecherunabhängigen Einzelworterkennung sehr niedrige Fehlerraten von z.B. 2,5 % bei 10 Wörtern oder 4 % bei 20 Wörtern, wobei zum Training lediglich 12 Testpersonen verwendet wurden. Somit können mit Hilfe der Erfindung mit erheblich weniger Aufwand im Vergleich zu konventionellen Verfahren entsprechend gute Erkennungsleistungen erbracht werden.

## Ansprüche

1. Neuronale Netzwerkarchitektur zur automatischen Mustererkennung, bestehend aus mindestens
- einer Eingangsschicht (IL) aus einem zweidimensionalen Feld von M × N neuronalen Elementen, M = Anzahl von aus einem Eingangssprachsignal abgeleiteter Merkmalsvektoren, N = Anzahl von Koeffizienten je Merkmalsvektor,
- einer verborgenen Schicht (HL) (hidden layer) aus einem zweidimensionalen Feld, dessen Elemente jeweils aus einem unterschiedlich gewichteten Summenwert der Amplituden eines LH × LV großen neuronale Elemente umfassenden Segmentes der Eingangsschicht gebildet werden, LH < M, LV < N, wobei die Segmente so gewählt werden, daß benachbarte Segmente sich mindestens in einer Richtung teilweise überlappen,
- und einer eindimensionalen Ausgangsschicht (OL), deren Elemente aus gewichteten Summenwerten aller Elemente der verborgenen Schicht gebildet werden, wobei dasjenige Element mit dem größten Summenwert dem zu erkennenden Muster entspricht.

2. Neuronale Netzwerkarchitektur nach Anspruch 1, dadurch gekennzeichnet, daß eine erste Dimension der zweidimensionalen Felder der Zeit und eine zweite Dimension der Frequenz entspricht, wobei die Amplituden die Zeit-Frequenz-Energiedichte darstellt.

3. Neuronale Netzwerkarchitektur nach Anspruch 2, dadurch gekennzeichnet, daß die Segmente so gewählt werden, daß benachbarte Segmente sich in einer Richtung, vorzugsweise in Richtung der ersten Dimension zur Hälfte überlappen.

4. Neuronale Netzwerkarchitektur nach Anspruch 3, dadurch gekennzeichnet, daß die Segmente so gewählt werden, daß die Anzahl der Elemente der Eingangsschicht zur Anzahl der Elemente der verborgenen Schioht in einem geeigneten Verhältnis zueinander stehen.

5. Neuronale Netzwerkarchitektur nach Anspruch 1, dadurch gekennzeichnet, daß eine oder mehrere eindimensionale verborgene Schichten der aus dem zweidimensionalen Feld bestehenden verborgenen Schicht (HL) nachgeschaltet sind, deren Elemente aus gewichteten Summenwerten aller Elemente der vorangehenden Schicht gebildet werden.

OL

HL

IL

1  5 6  10 11  15 16  20 21  25 26  30 31  35 36  40

Frequenz

Zeit ⟶